# EUROPÄISCHE PATENTSCHRIFT

(11) **EP 0 331 157 B1**
(45) Veröffentlichungstag und Bekanntmachung des Hinweises auf die Patenterteilung: **10.02.1993**
(21) Anmeldenummer: 89103641.0
(22) Anmeldetag: 02.03.1989
(51) Int. Cl.: H05B 39/04, H05B 41/392

(54) **Schaltnetzgerät**
Switching power supply
Alimentation de puissance à découpage

(30) Priorität: 03.03.1988 DE 3806909
(43) Veröffentlichungstag der Anmeldung: 06.09.1989
(73) Patentinhaber: BEME-ELECTRONIC GMBH, D-58706 Menden (DE); BK-ELECTRONIC GMBH, D-58809 Neunrade - Küntrop (DE)
(72) Erfinder: Tusch, Franz, D-5970 Plettenberg (DE); Klüppel, Clemens, D-5982 Neuenrade 5 (DE)
(74) Vertreter: Hassler, Werner, Dr.

(56) Entgegenhaltungen:
- EP-A- 0 264 765
- DE-A- 2 819 895
- US-A- 4 506 318

## Beschreibung

Die Erfindung betrifft ein Schaltnetzgerät für eine Lichtquelle, deren Helligkeit gesteuert wird, mit einem Gleichrichter, der an ersten Polen eine Halbwellengleichspannung bereitstellt, mit einer Glättungsschaltung, die an zweiten Polen eine geglättete Gleichspannung bereitstellt, mit zwei einem Hochfrequenzgenerator bildenden Gegentakt-Halbleiterschaltern, deren Steuereingänge an je eine Transformatorwicklung angekoppelt sind, und mit einem an den Gleichspannungseingang angekoppelten, spannungsabhängigen ersten Schaltelement zur Erregung des Hochfrequenzgenerators durch Zündung eines Halbleiterschalters über dessen Steuereingang, wobei an die zweiten Pole der Gleichspannung eine Reihenschaltung eines Kondensators und eines einstellbaren Ladewiderstandes angeschlossen, ist und wobei der die Ladespannung des Kondensators führende Anschluß mit den Eingang einer zweiten Schaltstufe verbunden ist.

Ein derartiges Schaltnetzgerät nach der US-A 4 506 318 dient zur Bereitstellung einer Hochfrequenzspannung für eine Lichtquelle, z.B. eine Gasentladungslampe oder eine Niedervolthalogenlampe. Die Helligkeit der Lichtquelle wird dadurch gesteuert, daß während jeder Halbwelle des Wechselstromes das Schaltelement zur Erregung der Hochfrequenzschaltung erst während einer bestimmten Phasnelage leitend wird, so daß man eine Phasenanschnittsteuerung erhält. So ergeben sich hohe Einschaltbelastungen und damit eine große Geräuschentwicklung.

Aufgabe der Erfindung ist die Bereitstellung eines Schaltnetzgerätes, das eine Helligkeitssteuerung der Lichtquelle ohne die hohen Schaltbelastungen einer Phasenanschnittschaltung ermöglicht.

Diese Aufgabe wird nach der Erfindung dadurch gelöst, daß die Eingangsleitung eines Steuereingangs über eine erste, die Eingangsleitung unterbrechende Schaltstufe geführt ist, daß der Ausgang der zweiten Schaltstufe in umgeschalteten Zustand die erste Schatstufe und das spannungsabhängige Schaltelement sperrt, daß an die ersten Pole des gleichrichters eine Nullspannungserkennungsschaltung angeschlossen ist und daß der Ausgang der Nullspannungserkennungsschaltung eine Entladestufe steuert, die einen Entladestromkreis für den Kondensator durchschaltet.

Die Erfindung unterscheidet sich insofern vom Stand der Technik, als nicht die Anstiegsflanke der Halbwelle, sondern die Abfallflanke der Halbwelle abgeschnitten wird. Der Hochfrequenzgenerator beginnt in üblicher Weise zu arbeiten, sobald die Halbwellenspannung vom Nullwert ansteigt. Eine Nullspannungserkennung ermöglicht jeweils den sicheren Anlauf des Hochfrequenzgenerators beim Nullspannungsdurchgang, also beim Beginn einer Halbwelle. Nach Ablauf einer eingestellten Zeitdauer werden die Zündimpulse für den Hochfrequenzgenerator gesperrt, so daß die Schwingung aufhört. Damit wird am Ende der Halbwelle die abfallende Flanke abgeschnitten, so daß dadurch eine Leistungssteuerung für die angeschlossene Lichtquelle möglich ist. Infolgedessen treten innerhalb des Transformators nicht mehr so hohe Belastungen auf. Dadurch ist die Geräuschentwicklung sehr stark herabgesetzt. Außerdem wird die Lebensdauer erhöht. Dieses macht sich besonders günstig bei Niedervolthalogenlampen bemerkbar, die in vielen Fällen in den Transformator integriert sind.

Eine abgewandelte Ausführungsform der Erfindung sieht vor, daß die Masseleitung an den Minuspol des Gleichrichters (4) über einen normalerweise leitenden dritten Transistor angeschlossen ist, und daß die zweite Schaltstufe in umgeschaltetem Zustand die Masseleitung über den dritten Transistor unterbricht.

Hier wird der Hochfrequenzgenerator durch Unterbrechung der Masseleitung gesperrt.

Eine sichere Abschaltung erzielt man dadurch, daß parallel zu dem einstellbaren Ladewiderstand ein Festwiderstand geschaltet ist, der auf die Halbwellendauer und die Eingangsnennspannung derart abgestimmt ist, daß am Kondensator die Schwellenspannung für die zweite Schaltstufe genau innerhalb der Dauer einer Halbwelle erreicht wird.

Die Erfindung ermöglicht dadurch eine Leistungsbegrenzung bei Überspannungen, daß parallel zu dem einstellbaren Ladewiderstand ein Festwiderstand geschaltet ist, der auf die Halbwellendauer und die Eingangsnennspannung derart abgestimmt ist, daß am Kondensator die Schwellenspannung für die zweite Schaltstufe genau innerhalb der Dauer einer Halbwelle erreicht wird. Beim Auftreten einer primärseitigen Überspannung wird also die Hochfrequenzschwingung am Ende jeder Halbwelle entsprechend abgeschnitten, so daß dadurch die Ausgangsleistung entsprechend begrenzt wird. Dies schließt Überlastungen der Lichtquelle aus und erhöht so die Lebensdauer der Lichtquelle.

Zur Unterbrechung der Hochfrequenzschwingungen ist vorgesehen, daß die erste Schaltstufe eine Emitter-Kollektor-Strecke eines als Emitterfolger geschalteten Transistors enthält. Diese erste Schaltstufe ermöglicht auch eine Verzögerung der Schaltimpulse für den Hochfrequenzgenerator, um Überschneidungen der Impulse auszuschließen. Man kann so eine definierte Totzeit zwischen aufeinanderfolgenden Impulsen einstellen.

Eine Abschaltung der Hochfrequenzschwingung ist dadurch möglich, daß der Ausgang der zweiten Schaltstufe mit der basis des Transistors verbunden ist.

Die Verzögerung der Zündimpulse und damit die Totzeit lassen sich dadurch genau einstellen, daß die Zündimpulsspannung der Transformatorwicklung über einen parallel zur basis-Kollektor-Strecke geschalteten Widerstand einen an die basis des Transistors angeschalteten Kondensator zur Einstellung der Totzeit beaufschlagt.

Eine genaue Nullspannungserkennung ist dadurch möglich, daß die Basis eines Transistors an den Teilerpunkt eines aus den Widerständen bestehenden, zwischen den ersten Polen angeschlossenen Spannungsteilers angeschlossen ist. Jeweils in Nulldurchgang der Halbwellenspannung wird so der Unterbrechungszustand der Hochfrequenzschwingung aufgehoben, so daß die Hochfrequenzschwingung neu einsetzt.

Dieser Unterbrechungszustand wird dadurch aufgehoben, daß an den Transistor die Basis eines Transistors angeschlossen ist, der parallel zu dem Kondensator liegt und eine Entladestrecke für denselben bildet.

Zur Festlegung einer sicheren Schaltschwelle ist vorgesehen, daß dem Kondensator über ein Schaltelement ein weiterer Kondensator parallel geschaltet ist.

Der Stromfluß in der Basis-Emitter-Strecke des Transistors wird dadurch gereitgestellt, daß der Kondensator über einen Widerstand mit der Basis verbunden ist.

Eine sichere Abschaltung des Hochfrequenzgenerators wird dadurch gewährleistet, daß der Kondensator mit dem Emitter eines Schalttransistors verbunden ist, dessen Schaltstrecke den Anschlußpunkt mit Masse verbindet.

Ausführungsformen der Erfindung werden im folgenden unter Bezugnahme auf die anliegenden Zeichnungen erläutert, in denen darstellen.
Fig. 1 ein Schaltbild einer ersten Ausführungsform,
Fig. 2 ein Schaltbild einer zweiten Ausführungsform und
Fig. 3 ein Schaltbild einer dritten Ausführungsform.

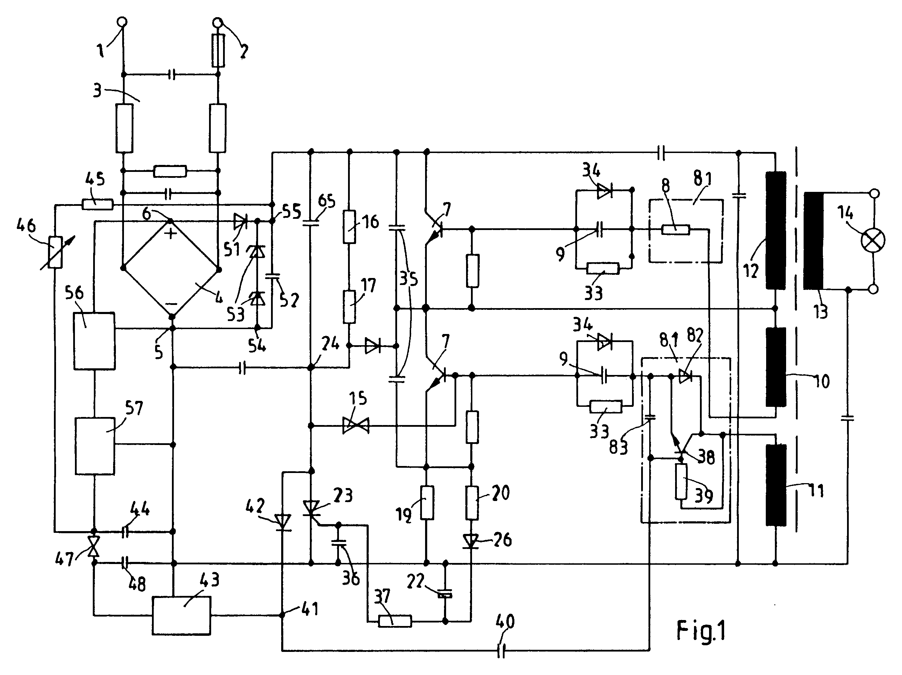

Die Schaltung nach Fig. 1 ist teilweise als Blockschaltbild ausgeführt. Zwei Eingänge 1 und 2 sind an eine Wechselbetriebsspannung angeschlossen. Die Betriebsspannung liegt über eine Funkentstörschaltung 3 an einen Gleichrichter 4. Die Funkentstörschaltung enthält zwei Stabkerndrosseln für höhere Frequenzen und Kondensatoren.

Der Gleichrichter 4 stellt eine Halbwellengleichspannung an den ersten Polen 5, 6 bereit. Diese Halbwellengleichspannung wird durch die Diode 51 und den Kondensator 52 und/oder 65 geglättet, so daß an den zweiten Polen 54, 55 eine geglättete Gleichspannung bereitsteht. Zwei Zenerdioden 53 dienen als Schutz gegen Überspannungen und sonstige Spannungsspitzen und Störimpulse.

Ein Hochfrequenzgenerator umfaßt zwei im Gegentakt arbeitende Halbleiterschalter 7, z.B. Transistoren, die jeweils über eine erste Schaltstufe 81, die als Widerstand 8 ausgebildet sein kann, und einen Kondensator 9 an eine Transformatorwicklung 10 bzw. 11 angeschlossen sind. Die Halbleiterschalter und die zugehörigen Ansteuerelemente sind für beide Halbleiterschalter mit gleichen Bezugsziffern versehen, daß diese Bauelemente jeweils genau die gleiche Funktion haben. Parallel zu jedem Kondensator 9 liegen ein Widerstand 33 zur Erhöhung der Steilheit der ansteigenden Flanke jedes Hochfrequenzimpulses und eine Diode 34 zur Erhöhung der Steilheit jeder abfallenden Flanke. Ferner ist zu jedem Halbleiterschalter 7 ein Kondensator 35 parallel geschaltet, der die Schaltflanken dämpft. Beide Halbleiterschalter 7 arbeiten auf eine Primärwicklung 12 des Transformators. An die Sekundärwicklung 13 ist eine Niedervolthalogenlampe 14 als Lichtquelle oder Verbraucher angeschlossen.

Die Halbleiterschalter 7 werden durch die Steuerwicklungen 10 und 11 im Gegentakt gezündet bzw. geschaltet, so daß der Hochfrequenzgenerator auf der eingestellten Frequenz schwingt. Zur erstmaligen Zündung des Hochfrequenzgenerators ist eine Steuerelektrode eines Halbleiterschalters 7 an ein erstes spannungsabhängiges Schaltelement 15 angekoppelt, das über Festwiderstände 16 und 17 mit dem Pol 55 verbunden ist. Das erste Schaltelement 15 ist im Ausführungsbeispiel ein Diac. Das Schaltelement 15 gibt einen Spannungsimpuls auf die Steuerelektrode des einen Halbleiterschalters 7, wenn die Gleichspannung die Durchbruchspannung des Schaltelements 15 überschreitet. Sobald der Halbleiterschalter 7 gezündet ist, erfolgt eine Gegentaktanregung der Halbleiterschalter 7, indem über die Steuerwicklungen 10 und 11 wechselweise die Steuerelektroden angesteuert werden, so daß der Hochfrequenzgenerator mit der eingestellten Frequenz schwingt.

Der Belastungsstrom mindestens eines Halbleiterschalters 7 fließt durch einen Widerstand 19 und erzeugt darin einen Spannungsabfall, der über einen Schutzwiderstand 20 und eine Diode 21 einen Kondensator 22 auflädt. Die Ladespannung des Kondensators 22 beaufschlagt die Steuerelektrode eines dritten Halbleiterschalters 23 in Form eines Thyristors 23. Der Thyristor 23 ist über den Anschlußpunkt 24 und Widerstände 16 und 17 an die zweiten Pole 54 und 55 angeschaltet. In Reihe zur Steuerelektrode und der Anode des Thyristors 23 liegt ein Kondensator 36. Dieser Kondensator 36 und der Widerstand 37 dienen zur Unterdrückung von Störimpulsen. Die Schaltelement sind so bemessen, daß der Thyristor 23 normalerweise nicht leitet.

Der normalerweise in dem Hochfrequenzgenerator fließende Strom reicht zur Bereitstellung der Zündspannung für den Thyristor 23 nicht aus. Wenn jedoch infolge einer Überhitzung oder Überlastung der Strom innerhalb des Hochfrequenzgenerators ansteigt, so wird eine ausreichend hohe Spannung auf die Zündelektrode des Thyristors 23 übertragen, so daß der Thyristor 23 zündet und damit den Anschlußpunkt 24 gegenüber Masse 6 kurzschließt. Infolgedessen erhält das Schaltelement 15 keine Spannung, so daß der Hochfrequenzgenerator nicht mehr gezündet werden kann. Auch wenn der Strom durch den Widerstand 19 wieder absinkt, schaltet der Thyristor 23 nicht ab. Der Thyristor 23 kommt erst in seinen Sperrzustand, wenn die Eingangsspannung abgeschaltet ist und der Fehler behoben wird. Der Kondensator 22 verzögert die Zündung des Thyristors 23. Dadurch wird ein Ansprechen auf hohe Einschaltströme verhindert.

Die Schaltstufe 81 ist im einfachsten Fall ein Widerstand 8. Zur Einstellung bzw. Sperrung des Zündimpulses für den jeweiligen Halbleiterschalter 7 kann man jedoch die Schaltstufe 81 wie auf dem unteren Teil der Fig. 1 dargestellt aufbauen. Hier ist in die Impulsleitung die Emitter-Kollektor-Strecke eines Transistors 38 eingefügt. Parallel zur Basis-Kollektor-Strecke sind ein Widerstand 39 und eine Freilaufdiode 82 geschaltet. Parallel zur Basis-Emitter-Strecke ist ein Kondensator 83 geschaltet, der jeweils über den Widerstand 38 durch den Schaltimpuls aufgeladen wird, so daß dadurch der Schaltimpuls eine definierte Verzögerung erfährt. Man kann dadurch sicherstellen, daß die Einschaltzeiten der beiden Transistoren 7 einander nicht überschneiden. Denn durch Induktivitäten und sonstige Schaltverzögerungen können sich sonst die Einschaltzeiten der Transistoren überschneiden, so daß ein hoher Strom über den Kurzschluß der zweiten Pole 54 und 55 fließt. Durch Einsatz von zwei ersten Schaltstufen 81 in beiden Schaltimpulsleitungen kann man so eine überschneidende Schaltung der Halbleiterschalter 7 ausschließen. Es läßt sich so eine feste Totzeit zwischen aufeinanderfolgenden Impulsen einstellen. Hierdurch wird die Lebensdauer des gesamten Schaltnetzgerätes sehr vorteilhaft beeinflußt.

Ein Kondensator 44 und ein Festwiderstand 45 sowie ein einstellbarer Ladewiderstand 46 bilden einen RC-Kreis, der zwischen die zweiten Pole 54 und 55 der Gleichspannung geschaltet ist. Die Gleichspannung lädt den Kondensator 44 also auf. Dessen Ladespannung wird über ein zweites Schaltelement 47, z.B. ein Diac, auf einen weiteren Kondensator 48 übertragen. Jeweils nach übertragung eines von den Kapazitäten der Kondensatoren abhängigen Teils der Ladungsmenge stellt sich eine Spannungsgleichheit ein und das Schaltelement 47 sperrt. Der Kondensator 44 wird nachgeladen, so daß sich ein sägezahnförmiger Spannungsverlauf ergibt. Die Spannung des Kondensators 48 beaufschlagt die bereits genannte zweite Schaltstufe 43, die beim Überschreiten einer Schwellenspannung den Ausgang gegen Masse durchschaltet. Das Schaltelement 47 legt eine eindeutige Schaltschwelle für die Umschaltung der Schaltstufe 43 fest, da der Kondensator 48 erst nach Überschreiten dieser Schaltschwelle aufgeladen werden kann.

Ein Kondensator 40 liegt einerseits an der Basis des Transistors 38 sowie andererseits an dem Anschlußpunkt 41, der mit dem Ausgang der Schaltstufe 43 und über eine Diode 42 mit der positiven Gleichspannung verbunden ist. Normalerweise ist der Kondensator 40 über die Diode 42 auf eine positive Spannung geladen. Wenn der Ausgang der Schaltstufe 43 nach Masse durchgeschaltet wird, wird auf die Basis des Transistors 38 eine negative Spannung übertragen, so daß derselbe sperrt.

Eine Nullspannungserkennungsschaltung 56 ist an die ersten Pole 5 und 6 der Halbwellengleichspannung angeschaltet und erkennt jeweils den Nullwert der Halbwellengleichspannung. Sobald dieser Nullwert erkannt ist, wird ein Ausgangssignal abgegeben, des eine Entladestufe 57 durchschaltet, die dann den Kondensator 44 entlädt. Hierdurch ist sichergestellt, daß bei jedem Nulldurchgang der Halbwellengleichspannung der Kondensator 44 entladen wird und die Schaltstufe 43 sperrt, so daß das Potential des Anschlußpunktes 41 ansteigt. Infolgedessen können über das erste Schaltelement 15 und über die Schaltimpulsleitungen wieder Zündimpulse auf die Halbleiterschalter 7 gegeben werden, so daß jeweils mit Beginn einer neuen Halbwelle der Hochfrequenzgenerator zu arbeiten beginnt und eine Brennspannung für die Lichtquelle liefert. Die Dauer dieser Brennspannung während jeder Halbwelle hängt von der Einstellung des Widerstandes 46 ab. Sobald über den Widerstand 46 der Kondensator aufgeladen ist, wird die Schwingung des Hochfrequenzgenerators unterbrochen, so daß bei der betreffenden Phase die Brennspannung abgeschnitten wird. Hierdurch ist eine Steuerung der Helligkeit der Lichtquelle möglich. Wenn der Anschlußpunkt 41 über die Schaltstufe 43 nach Masse durchverbunden ist, können weder das erste Schaltelement 15 noch der Transistor 38 geschaltet werden. Hierdurch sind die Zündimpulse für die Halbleiterschalter 7 sicher gesperrt.

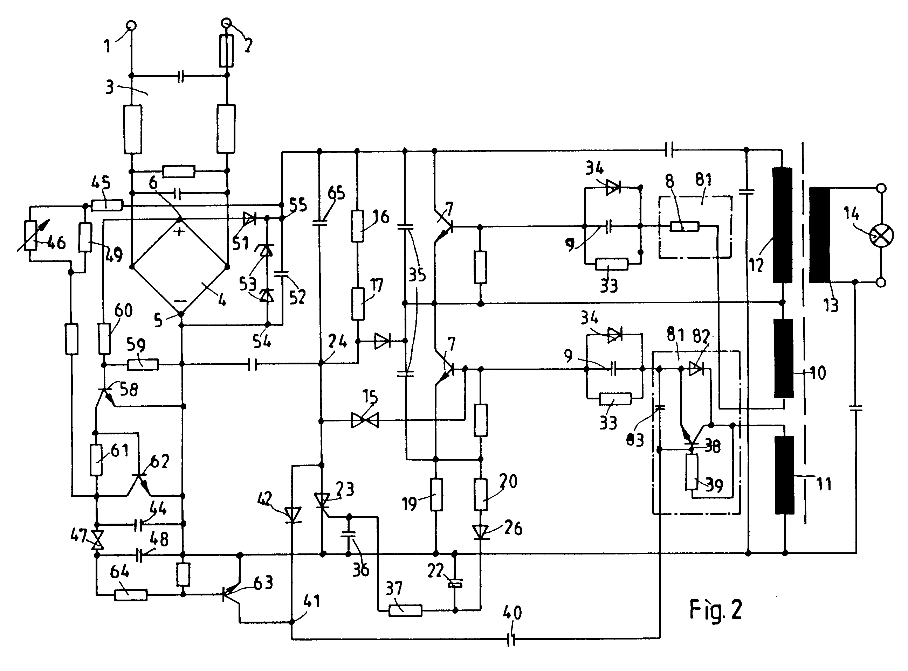

Fig. 2 zeigt eine abgewandelte Ausführungsform der Erfindung. Einerseits ist parallel zu dem einstellbaren Widerstand 46 ein weiterer Festwiderstand 49 in den Ladestromkreis des Kondensators 44 geschaltet. Der Widerstand 49 wird so festgelegt, daß bei dem unteren Einstellwert des Widerstandes 46 der Kondensator 44 gerade jeweils am Ende einer Halbwelle seine Schwellenspannung zur Schaltung der Schaltstufe 43 erreicht. Es wird also dadurch vermieden, daß beim Nennwert der Primärspannung und bei der Einstellung des Festwiderstandes 46 auf seinen unteren Einstellwert eine Sperrung der Hochfrequenzschwingung erfolgt. Wenn dagegen die Primärspannung ihren Nennwert übersteigt, so daß auch die Gleichspannung einen höheren Wert hat, wird dadurch die Ladezeit für den Kondensator 44 verkürzt, so daß das Ende der Halbwelle entsprechend abgeschnitten wird. Dadurch läßt sich die Leistung der Lichtquelle auf einen festen Wert steuern, der auch beim Überschreiten des Nennwertes der Primärspannung nicht überschritten wird.

Die Nullspannungserkennungsschaltung umfaßt einen Transistor 58, dessen Emitter mit Masse verbunden ist. Die Basis ist an den Verbindungspunkt eines Spannungsteilers aus den Widerständen 59 und 60 geschaltet, wobei der Spannungsteiler an die ersten Pole 5 und 6 angeschaltet ist. Der Transistor 58 ist also normalerweise während einer Halbwelle leitend. Im Nulldurchgang der Halbwellenspannung sperrt der Transistor 58, so daß derselbe sperrt. Der Kollektor des Transistors 58 ist über einen Widerstand 61 mit dem Kondensator 44 verbunden. Parallel zum Kondensator 44 ist die Emitter-Kollektor-Strecke eines Transistors 62 geschaltet, dessen Basis mit dem Kollektor des Transistors 58 verbunden ist. Solange der Transistor 58 leitet, ist der Transistor 62 also gesperrt, weil das Basispotential zu niedrig ist. Wenn dagegen der Transistor 58 im Nulldurchgang der Halbwellenspannung gesperrt wird, so steigt das Basispotential des Transistors 62 an, so daß derselbe leitend wird und die Emitter-Kollektor-Strecke des Transistors 62 einen Kurzschluß für den Kondensator 44 darstellt. Der Kondensator 44 wird über den Transistor 62 entladen. Der Kondensator 44 wird also bei jedem Nulldurchgang der Halbwellenspannung entladen, so daß die Aufladung des Kondensators 44 jeweils im Nulldurchgang einer Halbwellenspannung beginnt.

Die zweite Schaltstufe 43 umfaßt einen Transistor 63, dessen Basis über einen Widerstand 64 mit dem Kondensator 48 verbunden ist. Wenn also der Kondensator 48 auf eine positive Spannung aufgeladen ist, so wird der Transistor 63 leitend. Der Kondensator 48 liefert über den Widerstand 64 den Basistrom für den Transistor 63. Der dadurch gedingte Ladungsverlust wird durch die fortgesetzte Aufladung des Kondensators 44 und die Schaltung des Diac 47 ausgeglichen, so daß man einen sägezahnförmigen Spannungsverlauf erhält. Die Spannung des Kondensators 48 ist jedoch immer größer als die Schaltspannung des Transistors 63. Der Kollektor des Transistors 63 und der Anschlußpunkt 41 werden also gegenüber Masse kurzgeschlossen. Damit werden der Eingang des Diac 15 und die Basis des Transistors 38 auf Masse gelegt, so daß diese Schaltelemente nicht mehr geschaltet werden können. Infolgedessen wird der Hochfrequenzgenerator gesperrt, sobald der Transistor 63 leitend ist.

Die Aufladung des Kondensators 44 ist bereits zuvor beschrieben worden. Sobald die Ladespannung einen Schwellenwert überschreitet, z.B. 30 V, schaltet der Diac 47 durch, so daß die Ladespannung des Kondensators 44 auf den Kondensator 48 übertragen wird und die Basis des Transistors 63 beaufschlagt. Der Diac 47 legt also einen Schwellenwert für die Umschaltung fest, der sehr genau definiert ist. Der Diac 47 sperrt, sobald der Kondensator 48 vollständig aufgeladen ist. Durch den weiterfließenden Ladestrom wird der Kondensator 44 wieder aufgeladen, so daß der Diac 47 intermittierend leitet. An den Kondensator 48 ergibt sich infolgedessen eine sägezahnförmige Spannung. Durch Bemessung der Schaltelemente ist dafür gesorgt, daß der Transistor 63 in seinem Leitungszustand gehalten wird, sobald der Diac 47 einmal durchgeschaltet ist.

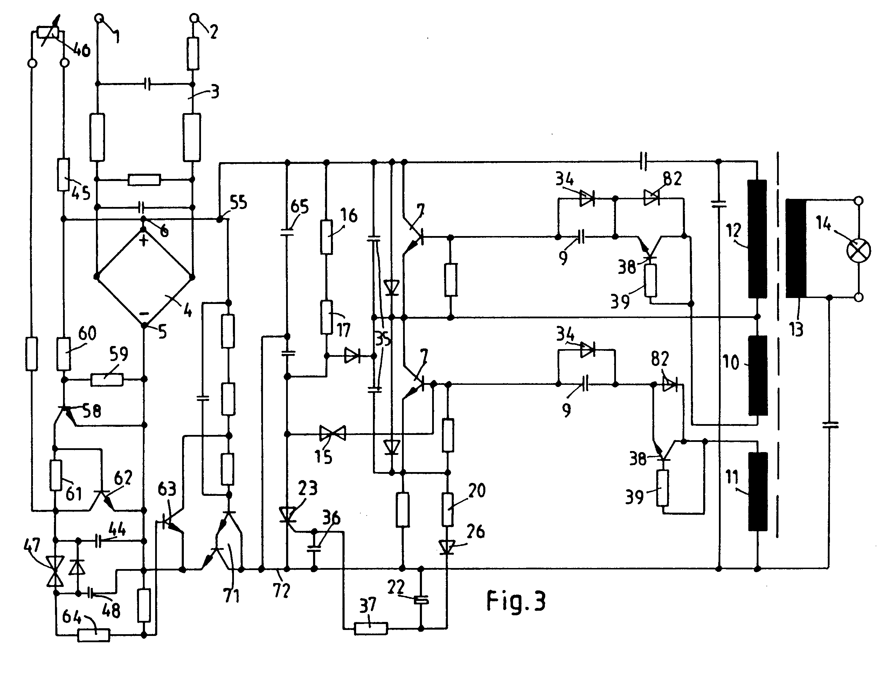

Bei der Ausführungsform nach Fig. 3 sieht die Erfindung eine Unterbrechung der Masseleitung 72 vor. Die Nullspannungserkennung und der Aufbau der Schaltstufen zur Phasenabschnittssteuerung sind genau gleich. In die Masseleitung 72 ist eine Darlingtonstufe 71 oder eine andere Halbleiterschaltstufe eingefügt. Die Darlingtonstufe 71 ist normalerweise leitend, weil sie von der positiven Gleichspannung angesteuert wird. Wenn jedoch der Transistor 63 leitend wird, so wird der Steuereingang der Darlingtonstufe 71 nach Masse gezogen, so daß die Darlingtonstufe 71 sperrt und die Masseleitung 72 unterbricht. Infolgedessen kann bei dem entsprechenden Phasenwert der Hochfrequenzgenerator nicht weiter schwingen und wird unterbrochen.

Erst beim Nullspannungsdurchgang wird der Transistor 63 wieder leitend und schaltet die Masseleitung 72 durch. Nunmehr kann der Hochfrequenzgenerator wieder von neuem schwingen.

## Patentansprüche

1. Schaltnetzgerät für eine Lichtquelle (14), deren Helligkeit gesteuert wird, mit einem Gleichrichter (4), der an ersten Polen (5,6) eine Halbwellengleichspannung bereitstellt, mit einer Glättungsschaltung (51,52), die an zweiten Polen (54,55) eine geglättete Gleichspannung bereitstellt, mit zwei einen Hochfrequenzgenerator bildenden Gegentakt-Halbleiterschaltern (7), deren Steuereingänge an je eine Transformatorwicklung (10,11) angekoppelt sind, und mit einem an den Gleichspannungseingang angekoppelten, spannungsabhängigen ersten Schaltelement (15) zur Erregung des Hochfrequenzgenerators durch Zündung eines der zwein Halbleiterschalter (7) über dessen Steuereingang, wobei an die zweiten Pole (54,55) der Gleichspannung eine Reihenschaltung eines ersten Kondensators (44) und eines einstellbaren Ladewiderstandes (46) angeschlossen ist und wobei der die Ladespannung des ersten Kondensators (44) führende Anschluß mit den Eingang einer zweiten Schaltstufe (43) verbunden ist, dadurch gekennzeichnet, daß die Eingangsleitung des Steuereingangs eines der Gegentakt-Halbleiterschalten (7) über eine erste, die Eingangsleitung unterbrechende Schaltstufe (81) geführt ist, daß der Ausgang der zweiten Schaltstufe (43) in umgeschaltetem Zustand die erste Schaltstufe (81) und das spannungsabhängige erste Schaltelement (15) sperrt, daß an die ersten Pole (5,6) des Gleichrichters (4) eine Nullspannungserkennungsschaltung (56) angeschlossen ist und daß der Ausgang der Nullspannungserkennungsschaltung (56) eine Entladestufe (57) steuert, die einen Entladestromkreis für den ersten Kondensator (44) durchschaltet.

2. Schaltnetzgerät nach Anspruch 1, dadurch gekennzeichnet, daß die Masseleitung an den Minuspol des Gleichrichters (4) über einen normalerweise leitenden dritten Transistor (71) angeschlossen ist, und daß die zweite Schaltstufe (43) in umgeschaltetem Zustand die Masseleitung über den dritten Transistor (71) unterbricht.

3. Schaltnetzgerät nach Anspruch 2, dadurch gekennzeichnet, daß der Transistor (71) als Darlingtonstufe ausgebildet ist.

4. Schaltnetzgerät nach einem der Ansprüche 1 bis 3, dadurch gekennzeichnet, daß parallel zu dem einstellbaren Ladewiderstand (46) ein Festwiderstand (49) geschaltet ist, der auf die Halbwellendauer und die Eingangsnennspannung derart abgestimmt ist, daß am ersten Kondensator (44) die Schwellenspannung für die zweite Schaltstufe (43) genau innerhalb der Dauer einer Halbwelle erreicht wird.

5. Schaltnetzgerät nach einem der Ansprüche 1 bis 4, dadurch gekennzeichnet, daß die erste Schaltstufe (81) eine Emitter-Kollektor-Strecke eines als Emitterfolger geschalteten vierten Transistors (38) enthält.

6. Schaltnetzgerät nach Anspruch 5, dadurch gekennzeichnet, daß der Ausgang der zweiten Schaltstufe (43) mit der Basis des vierten Transistors (38) verbunden ist.

7. Schaltnetzgerät nach Anspruch 5 oder 6, dadurch gekennzeichnet, daß die Zündimpulsspannung der Transformatorwicklung (11) über einen parallel zur Basis-Kollektor-Strecke geschalteten Widerstand (39) einen an die Basis des vierten Transistors (38) angeschalteten zweiten Kondensator (40) zur Einstellung der Totzeit beaufschlagt.

8. Schaltnetzgerät nach einem der Ansprüche 1 bis 7, dadurch gekennzeichnet, daß zur Nullspannungserkennung die Basis eines fünften Transistors (58) an den Teilerpunkt eines aus den Widerständen (59,50) bestehenden, zwischen den ersten Polen (5,6) angeschlossenen Spannungsteilers angeschlossen ist.

9. Schaltnetzgerät nach Anspruch 8, dadurch gekennzeichnet, daß an den fünften Transistor (58) die Basis eines sechsten Transistors (62) angeschlossen ist, der parallel zu dem ersten Kondensator (44) liegt und eine Entladestrecke für denselben bildet.

10. Schaltnetzgerät nach einem der Ansprüche 1 bis 9, dadurch gekennzeichnet, daß dem ersten Kondensator (44) über ein zweites Schaltelement (47) ein dritter Kondensator (48) parallel geschaltet ist.

11. Schaltnetzgerät nach Anspruch 10, dadurch gekennzeichnet, daß der dritte Kondensator (48) einerseits mit dem Emitter eines siebten Transistors (63) verbunden ist, dessen Schaltstrecke den underen Anschlußpunkt (41) des zweiten Kondensators (40) mit Masse verbindet.

12. Schaltnetzgerät nach Anspruch 11, dadurch gekennzeichnet, daß der dritte Kondensator (48) andererseits über einen Widerstand (64) mit der Basis des siebten Transistors (63) verbunden ist.

## Claims

1. A switch-mode power supply unit for a light source (14), the brightness of which is controlled, comprising a rectifier (4) which makes available a half-wave d.c. voltage at first poles (5, 6), a smoothing circuit (51, 52) which makes available a smoothed d.c. voltage at second poles (54, 55), two push-pull semiconductor switches (7) which form a high frequency generator and the control inputs of which are coupled to a respective transformer winding (10, 11), and a voltage-dependent, first switching element (15), coupled to the d.c. voltage input, which serves to energize the high frequency generator by igniting one of the two semiconductor switches (7) via its control input, wherein a series arrangement of a first capacitor (44) and an adjustable charging resistor (46) is connected to the second poles (54, 55) of the d.c. voltage, and wherein the terminal which conducts the charging voltage of the first capacitor (44) is connected to the input of a second switching stage (43), characterised in that the input line of the control input of one of the push-pull semiconductor switches (7) leads across a first switching stage (81) which interrupts the input line, that in the switched-over state the output of the second switching stage (43) blocks the first switching stage (81) and the voltage-dependent, first switching element (15), that a zero voltage recognition circuit (56) is connected to the first poles (5, 6) of the rectifier (4), and that the output of the zero voltage recognition circuit (56) controls a discharge stage (57) which switches through a discharge circuit for the first capacitor (44).

2. A switch-mode power supply unit as claimed in Claim 1, characterised in that the earth line is connected to the minus pole of the rectifier (4) via a normally conductive third transistor (71), and that in the switched-over state the second switching stage (43) interrupts the earth line via the third transistor (71).

3. A switch-mode power supply unit as claimed in Claim 2, characterised in that the transistor (71) is designed as a Darlington stage.

4. A switch-mode power supply unit as claimed in one of Claims 1 to 3, characterised in that a fixed resistor (49) is connected in parallel to the adjustable charging resistor (46), where said fixed resistor (49) is tuned to the duration of the half wave and to the input nominal voltage in such manner that the threshold voltage for the second switching stage (43) is reached across the first capacitor (44) precisely within the duration of a half-wave.

5. A switch-mode power supply unit as claimed in one of Claims 1 to 4, characterised in that the first switching stage (81) comprises an emitter-collector path of a fourth transistor (38) connected as emitter follower.

6. A switch-mode power supply unit as claimed in Claim 5, characterised in that the output of the second switching stage (43) is connected to the base of the fourth transistor (38).

7. A switch-mode power supply unit as claimed in Claim 5 or 6, characterised in that via a resistor (39) connected in parallel to the base-collector path, the ignition pulse voltage of the transformer winding (11) acts on a second capacitor (40), which is connected to the base of the fourth transistor (38), for the setting of the dead time.

8. A switch-mode power supply unit as claimed in one of Claims 1 to 7, characterised in that for the zero voltage recognition, the base of a fifth transistor (58) is connected to the divider point of a voltage divider which is formed by the resistors (59, 50) and is connected between the first poles (5, 6).

9. A switch-mode power supply unit as claimed in Claim 8, characterised in that the fifth transistor (58) is connected to the base of a sixth transistor (62) which is connected in parallel to the first capacitor (44) and forms a discharge stage for the said capacitor.

10. A switch-mode power supply unit as claimed in one of Claims 1 to 9, characterised in that a third capacitor (48) is connected in parallel to the first capacitor (44) via a second switching element (47).

11. A switch-mode power supply unit as claimed in Claim 10, characterised in that the third capacitor (48) is connected on the one hand to the emitter of a seventh transistor (63), the switching path of which connects the other connection point (41) of the second capacitor (40) to earth.

12. A switch-mode power supply unit as claimed in Claim 11, characterised in that the third capacitor (48) is connected on the other hand to the base of the seventh transistor (63) via a resistor (64).

## Revendications

1. Appareil de branchement au réseau d'une source lumineuse (14) dont la brillance est modulée, avec un redresseur (4) créant aux premiers pôles (5, 6) une tension redressée à demi-ondulation, avec un circuit de lissage (51, 52) créant sur des seconds pôles (54, 56) une tension redressée lissée, avec deux dispositifs de commutation symétriques à semi-conducteur (7) formant un générateur de hautes fréquences, dont chacune des entrées de commande sont accouplées à un bobinage (10, 11) de transformateur, et avec un premier élément de commutation (15) dépendant de la tension et couplé à l'entrée de la tension redressée, destiné à exciter le générateur de hautes fréquences par amorçage d'un des deux dispositifs de commutation à semi-conducteur (7) via l'entrée de commande de celui-ci, tandis qu'aux seconds pôles (54, 55) de la tension redressée est raccordé un circuit série constitué d'un premier condensateur (44) et d'une résistance de charge (46) variable et que le raccordement conduisant la tension de charge du premier condensateur (44) est relié à l'entrée d'un second étage de commutation (43), caractérisé en ce que le conducteur d'entrée de l'entrée de commande d'un des dispositifs de commutation symétrique à semi-conducteur (7) est branchée sur un premier étage de commutation (81) interrompant le conducteur d'entrée, en ce que la sortie du second étage de commutation (43) bloque dans l'état conducteur de celui-ci le premier étage de commutation (81) et le premier élément de commutation (15) dépendant de la tension, en ce qu'aux premiers pôles (5, 6) du redresseur (4) est raccordé un circuit (56) de détection de tension nulle et en ce que la sortie du circuit (56) de détection de tension nulle commande un étage de décharge (57) qui branche un circuit de décharge du courant du premier condensateur (44).

2. Appareil de branchement au réseau selon la revendication 1, caractérisé en ce que le conducteur de mise à la masse est raccordé au pôle négatif du redresseur (4) par l'intermédiaire d'un troisième transistor (71) normalement conducteur et en ce que le second étage de commutation (43) interrompt en son état conducteur le conducteur de masse, par l'intermédiaire du troisième transistor (71).

3. Appareil de branchement au réseau selon la revendication 2, caractérisé en ce que le transistor (71) se présente sous forme d'un étage Darlington.

4. Appareil de branchement au réseau selon l'une des revendications 1 à 3, caractérisé en ce qu'en parallèle sur la résistance de charge réglable (46) est branchée une résistance fixe (49) dont la valeur est accordée à la durée de la demi-ondulation et à la tension nominale d'entrée de telle sorte qu'aux bornes du premier condensateur (44) la tension de seuil du second étage de commutation (43) apparaît en un moment précis de la durée d'une demi-ondulation.

5. Appareil de branchement au réseau selon l'une des revendications 1 à 4, caractérisé en ce que le premier étage de commutation (81) contient une branche émetteur-collecteur d'un quatrième transistor (38) branché en émetteur-suiveur.

6. Appareil de branchement au réseau selon la revendication 5, caractérisé en ce que la sortie du second étage de commutation (43) est reliée à la base du quatrième transistor (38).

7. Appareil de branchement au réseau selon la revendication 5 ou 6, caractérisé en ce que la tension des impulsions d'amorçage du bobinage de transformateur (11) attaque par l'intermédiaire d'une résistance (39) branchée en parallèle sur la branche base-collecteur un second condensateur (40) raccordé à la base du quatrième transistor (38), pour le réglage du temps mort.

8. Appareil de branchement au réseau selon l'une des revendications 1 à 7, caractérisé en ce qu'en vue de la détection de la tension nulle la base d'un cinquième transistor (58) est reliée au point intermédiaire d'un diviseur de tension constitué des résistances (59, 50), entre les premiers pôles (5, 6).

9. Appareil de branchement au réseau selon la revendication 8, caractérisé en ce qu'au cinquième transistor (58) est raccordée la base d'un sixième transistor (62) qui est situé en parallèle sur le premier condensateur (44) et forme pour celui-ci une branche de décharge.

10. Appareil de branchement au réseau selon l'une des revendications 1 à 9, caractérisé en ce qu'un troisième condensateur (48) est branché en parallèle sur le premier condensateur (44), via un second élément de commutation (47).

11. Appareil de branchement au réseau selon la revendication 10, caractérisé en ce qu'un troisième condensateur (48) est branché d'un côté sur l'émetteur d'un septième transistor (63) dont la branche de passage relie à la masse le point de raccordement intérieur (41) du second condensateur (40).

12. Appareil de branchement au réseau selon la revendication 11, caractérisé en ce que le troisième condensateur (48) et d'autre part relié via une résistance (64) à la base du septième transistor (62).
